Europäisches Patentamt

European Patent Office

Office européen des brevets

(19)

(11) EP 0 875 267 A1

(12) EUROPÄISCHE PATENTANMELDUNG

(43) Veröffentlichungstag:
04.11.1998 Patentblatt 1998/45

(51) Int. Cl.⁶: B01D 9/00

(21) Anmeldenummer: 98107534.4

(22) Anmeldetag: 24.04.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 29.04.1997 DE 19718088

(71) Anmelder:
BASF AKTIENGESELLSCHAFT
67056 Ludwigshafen (DE)

(72) Erfinder:
• Eck, Bernd
  68519 Viernheim (DE)
• Heilek, Jörg
  69245 Bammental (DE)

(74) Vertreter:
Isenbruck, Günter, Dr. et al
Patent- und Rechtsanwälte Bardehle-
Pagenberg-Dost-Altenburg-Frohwitter-Geissler
& Partner
Theodor-Heuss-Anlage 12
68165 Mannheim (DE)

(54) **Verfahren zur Kristallisation durch Verdampfung und Brüdenkondensation**

(57) In einem Verfahren zur Kristallisation von zu gewinnendem Material wird Fluid aus einer Schmelze bzw. einer Lösung, die das zu gewinnende Material und das Fluid enthält, verdampft und das verdampfte Fluid in ein flüssiges Material unter Ausbildung eines flüssigen Gemisches kondensiert bzw. absorbiert, wobei die zu kondensierenden/absorbierenden Fluidkomponenten Partialdrücke über dem flüssigen Gemisch aufweisen, die kleiner sind als die Partialdrücke dieser Komponenten über der kristallisierenden Lösung/Schmelze und der Gefrierpunkt des flüssigen Gemisches tiefer liegt als die Kondensations-/Absorptionstemperatur im flüssigen Gemisch.

EP 0 875 267 A1

**Beschreibung**

Die vorliegende Erfindung betrifft ein Verfahren zur Kristallisation von zu gewinnendem Material durch Verdampfung von Fluid aus einer Schmelze bzw. Lösung, die das zu gewinnende Material, das Fluid und gegebenenfalls weitere Komponenten enthält, und Kondensation des verdampften Fluids (Brüden) in ein flüssiges Material unter Ausbildung eines flüssigen Gemisches.

Kristallisationsverfahren werden in vielfältiger Weise zur Feststoffbildung und/oder Reinigung von organischen oder anorganischen Substanzen angewendet. Beispiele sind Verfahren zur Kristallisation von Kochsalz, Zucker, Ammoniumsulfat, Soda und Adipinsäure.

Nach der Art der Erzeugung der zur Feststoffbildung nötigen Übersättigung wird zwischen Verfahren der Kühlungskristallisation und Verfahren der Verdampfungskristallisation unterschieden. Während bei der Kühlungskristallisation die Feststoffbildung durch Abkühlen der zu kristallisierenden Lösung/Schmelze erfolgt, wird bei der Verdampfungskristallisation die Löslichkeitsgrenze des zu kristallisierenden Feststoffs in der Lösung/Schmelze durch Verdampfung einer oder mehrerer Komponenten der Lösung/Schmelze überschritten (Lösungsmittelentzug). Der bei der Verdampfungskristallisation den Kristallisationsapparat verlassende Brüden muß üblicherweise in einem Kondensationsapparat kondensiert werden.

Der kondensierte Brüden kann, falls erforderlich, teilweise oder ganz in den Kristallisationsapparat zurückgeführt werden (Rückfluß des Kondensats). Da bei Rückflußfahrweise der Kristallisation kein oder nur ein Teil des Lösungsmittels entzogen wird, in jedem Fall aber durch die Verdampfung ein Wärmestrom abgeführt wird, bezeichnet man diese Verfahrensweise auch als Siedekühlung. Die Siedekühlung ist zwischen dem reinen Kühlungs- und dem reinen Verdampfungsverfahren (ohne Rückführung des kondensierten Brüdens) anzusiedeln.

Gegenüber einem mit indirekter Kühlung über Wärmeüberträger arbeitenden Kühlungskristallisationsverfahren hat das Siedekühlungsverfahren den großen Vorteil einer direkten Kühlung der zu kristallisierenden Lösung/Schmelze (direkter Entzug der Verdampfungswärme aus der zu kristallisierenden Lösung/Schmelze). Dadurch werden Betriebsprobleme durch Verkrustungen, wie sie meist in den Warmeüberträgern einer indirekten Kühlung auftreten, vermieden.

Aus der offengelegten japanischen Patentanmeldung JP 07082210-A ist ein Verfahren zur Reinigung von Acrylsäure bekannt, bei dem Wasser zu roher Acrylsäure zugegeben wird, die kein oder wenig Wasser enthält. Teile des Acrylsäure-Wasser-Gemisches werden verdampft, um unter Vakuum eine adiabatische Kühlung herbeizuführen, wodurch Acrylsäurekristalle ausfallen, die abgetrennt werden. Hierbei beträgt der Wassergehalt der koexistierenden Mutterlauge zwischen 2 und 10 Gew.-%. Bei der Verdampfung wird Dampf in einen Kondensator geleitet, während Acrylsäure auf der Oberfläche des Kondensators fließt, um eine Eisbildung zu verhindern. Oder es fließt Wasser auf der Oberfläche des Kondensators, um eine Ausfällung von Acrylsäurekristallen zu verhindern.

In US-A-5 061 306 wird ein VFVPE-Prozeß (*Vacuum Freezing Vapour Pressure Enhancement*) beschrieben, der mehrstufig durchgeführt wird. Bei diesem Prozeß wird Wasser aus einer verdünnten wäßrigen Lösung bei einem Druck unter Tripelpunktsdruck verdampft. Der Wasserdampf wird in einer hochkonzentrierten wäßrigen Kondensationsmischung (z.B. Lithiumbromid, Calciumchlorid) absorbiert, die im Vergleich zur kristallisierenden Lösung wärmer ist, aber einen geringeren Wasserdampfpartialdruck aufweist. Die Absorptionswärme wird dazu genutzt, reines Wasser auf einem Druckniveau oberhalb des Tripelpunktdrucks (*Pressure Enhancement*) zu verdampfen. Bei diesem Prozeß kristallisiert auch Wasser aus. Diesen VFVPE-Prozeß beschreibt als Anwendungsbeispiel auch ein Artikel aus *Heat and Mass Transfer, 31, (1996), 291-299*, der sich mit dem Stoff- und Wärmeübergang bei der Absorption von Wasserdampf in einer Kondensationsmischung befaßt. Bei einem Artikel aus *Desalination, 104, (1996), 155-163*, wird Wasserdampf in eine höher konzentrierte Salzlösung (NaCl) als Kondensationsmischung kondensiert/absorbiert. Dieser Prozeß wird als "*Vacuum Freezing*" oder "*Freeze Concentration*" bezeichnet. Er findet Anwendung bei der Gefrierkonzentration von Lebensmitteln oder Entsalzung von Wasser. Bei allen in den drei Literaturstellen offenbarten Verfahren ist Wasser die kristallisierende und verdampfende Substanz.

Der Erfindung lag die Aufgabe zugrunde, die Verfahren der Verdampfungskristallisation und der Kristallisation durch Siedekühlung so zu verbessern, daß gegenüber den bisher bekannten Verfahren erweiterte Einsatzbereiche und Vorteile im Hinblick auf die Wirtschaftlichkeit dieser Verfahren erzielt werden.

Es wurde gefunden, daß sich dieses technische Problem dadurch lösen läßt, indem man zu gewinnendes Material durch Verdampfung von Fluid aus einer Schmelze bzw. Lösung, die das zu gewinnende Material und Fluid enthält, kristallisiert und das verdampfte Fluid (Brüden) in ein flüssiges Material kondensiert bzw. absorbiert. Hierbei bildet sich ein flüssiges Gemisch aus, über dem die zu kondensierenden/absorbierenden Fluidkomponenten Partialdrücke aufweisen, die kleiner sind als die Partialdrücke dieser Komponenten über der kristallisierenden Lösung/Schmelze und dessen Gefrierpunkt tiefer liegt als die Kondensations-/Absorptionstemperatur.

Somit betrifft die Erfindung ein Verfahren zur Kristallisation von zu gewinnendem Material durch Verdampfung von Fluid aus einer Schmelze bzw. Lösung, die das zu gewinnende Material, das Fluid und gegebenenfalls weitere Komponenten enthält, und Kondensation oder Absorption des verdampften Fluids (Brüden) in ein flüssiges Material unter Ausbildung eines flüssigen Gemisches, wobei das zu gewinnende Material ausgewählt ist aus:

(a) anorganischen Salzen und Salzen organischer Verbindungen und deren Solvate, vorzugsweise Hydrate, die im Gemisch mit Wasser und/oder organischen Lösungsmitteln als Fluid vorliegen,

(b) organischen Komponenten, die in einem engsiedenden Gemisch mit organischen Verbindungen und/oder Wasser vorliegen, wobei die unter Kristallisationsdruck und -temperatur im Gleichgewicht stehenden Gas- und Flüssigphasen hinsichtlich des zu gewinnenden Materials, der organischen Verbindungen und/oder Wasser Unterschiede von < 10 Gew.-% in den Konzentrationen aufweisen,

(c) Alkandiolen, die im Gemisch mit Wasser und/oder organischen Verbindungen vorliegen, und

(d) organischen Komponenten, die im Gemisch mit organischen Verbindungen und/oder Wasser vorliegen, wobei die zu gewinnende, organische Komponente leichter siedend in Bezug auf die organischen Verbindungen und/oder Wasser ist,

das dadurch gekennzeichnet ist, daß die zu kondensierenden/absorbierenden Fluidkomponenten Partialdrücke über dem flüssigen Gemisch aufweisen, die kleiner sind als die Partialdrücke dieser Komponenten über der kristallisierenden Lösung/Schmelze und der Gefrierpunkt des flüssigen Gemisches tiefer liegt als die Kondensations-/Absorptionstemperatur im flüssigen Gemisch.

Bevorzugte Ausführungsformen der Erfindung sind in den Unteransprüchen, der nachfolgenden Beschreibung mit den Ausführungsbeispielen sowie den Figuren beschrieben.

Bei den Figuren zeigen

Figur 1    allgemein ein Dampfdruckdiagramm;
Figur 2    das Phasendiagramm für NaOH-$H_2O$;
Figur 3    ein Verfahrensschema zur Kristallisation von NaOH $\cdot$ 3,5 $H_2O$ durch Siedekühlung;
Figur 4A   das Phasendiagramm für das System Essigsäure-$H_2O$;
Figur 4B   einen vergrößerten Ausschnitt von Figur 4A; und
Figur 5    ein Verfahrensschema zur Kristallisation von Essigsäure durch Siedekühlung.

Die im erfindungsgemäßen Verfahren verwendeten Kristallisationsverfahren und -apparate unterliegen grundsätzlich keiner Beschränkung. Es eignen sich alle Kristallisationsverfahren, bei denen eine Durchmischung der kristallisierenden Lösung/Schmelze durch Rühren oder Umwälzen erfolgt, sowohl bei kontinuierlicher als auch bei diskontinuierlicher Fahrweise. Als Apparate werden bevorzugt Rührkesselkristallisatoren und Forced Circulation-Kristallisatoren eingesetzt, aber auch Leitrohr- und Fließbettkristallisatoren können eingesetzt werden. Die Kristallisation kann aus Schmelze oder Lösung durchgeführt werden. Ebenso unterliegen die Kondensationsverfahren und -apparate sowie die Erzeugung der für die Kondensation erforderlichen Stoff- und Wärmeaustauschflächen keinerlei Beschränkung. Vorzugsweise erfolgt die Erzeugung der Austauschfläche durch Versprühen des flüssigen Gemisches, das im folgenden auch als Kondersatormischung bezeichnet wird, und/oder Berieseln von Apparateflächen und/oder Einbauten und/oder Füllkörper mit der Kondensatormischung.

Die zu gewinnenden Materialien, die im Gemisch mit Fluid und gegebenenfalls weiteren Komponenten vorliegen, sind:

(a) anorganische Salze und Salze organischer Verbindungen und deren Solvate, insbesondere Hydrate, bevorzugt mit Kristallisationstemperaturen unter 40°C, die im Gemisch mit Wasser und/oder organischen Lösungsmitteln als Fluid vorliegen; bevorzugte Beispiele sind $Na_2SO_4 \cdot 10H_2O$, Na-Acetat $NaC_2H_3O_2 \cdot 3H_2O$, $KOH \cdot 2H_2O$ und NaOH-Hydrat, z.B. $NaOH \cdot 3,5H_2O$, besonders bevorzugt ist $NaOH \cdot 3,5\ H_2O$;

(b) eine organische Komponente, die in eng siedenden Mischungen mit organischen Verbindungen und/oder Wasser vorliegt, wobei die unter Kristallisationsdruck und -temperatur im Gleichgewicht miteinander stehenden Gas- und Flüssigphasen hinsichtlich der Hauptkomponenten (d.h. zu gewinnendes Material und Fluid) keine wesentlichen Unterschiede in ihren Zusammensetzungen aufweisen und daher auch ähnliche Gefrierpunkte aufweisen; nicht wesentlich bedeutet hierbei, daß die Differenzen < 10 Gew.-% in den Konzentrationen der Hauptkomponenten in der Gas- und der Flüssigphase sind; bevorzugte Beispiele: Essigsäure als zu gewinnendes Material mit Wasser-Essigsäure-Mischung als Fluid; im folgenden sind die Beziehungen für die bevorzugten Massenanteile an Essigsäure und Wasser angegeben:

$$\mid x^{v}_{ESS} - x^{l}_{ESS} \mid < 10\%$$

$$\mid x^{v}_{H2O} - x^{l}_{H2O} \mid < 10\%$$

wobei x = Massenanteil; v = Dampf (*vapor*); l = flüssig (*Liquid*); ESS = Essigsäure; und $H_2O$ = Wasser;

(c) Alkandiole, die im Gemisch mit organischen Verbindungen und/oder Wasser vorliegen; bevorzugte Beispiele sind 1,4-Butandiol und 1,6-Hexandiol;

(d) eine organische Komponente, die im Gemisch mit organischen Verbindungen und/oder Wasser vorliegt, wobei die zu gewinnende (kristallisierende) organische Komponente leichter siedend in Bezug auf die organische Verbindung und/oder das Wasser ist, und dadurch der unter Kristallisationsdruck /-temperatur mit der Flüssigphase im Gleichgewicht stehende Brüden nicht ohne Feststoffanfall niedergeschlagen werden kann; bevorzugte Beispiele sind: p-Xylol als zu gewinnende Komponente im Gemisch mit o-Xylol und/oder m-Xylol.

Die bei den zu gewinnenden Materialien (a) bis (d) als Fluid vorliegenden organischen Lösungsmittel oder organischen Verbindungen sind vorzugsweise ausgewählt aus den Stoffgruppen der Alkohole, Ether, Ketone, Ester, Aldehyde, Carbonsäuren, Paraffine und halogenierte Kohlenwasserstoffe. Bei dem zu gewinnenden Material (a) bis (d) ist die Konzentration an dem zu gewinnenden Material in dem Gemisch, aus dem es abgetrennt werden soll, größer als bei der eutektischen Zusammensetzung, vorzugsweise beträgt die Konzentration an dem zu gewinnenden Material mindestens 10 Gew.-%, insbesondere 20 bis 95 Gew.-%, bezogen auf das Gemisch, aus dem es abgetrennt werden soll.

Erfindungsgemäß ist das zu gewinnende Material das kristallisierende Material. Während bei dem zu gewinnenden Material (a) das verdampfende Fluid im wesentlichen frei von zu gewinnendem Material ist, muß dieser Fall nicht bei den zu gewinnenden Materialien (b) bis (d) vorliegen. Meist liegt bei den letztgenannten Komponenten kein Reinstoffdampf vor, sondern ein Fluid, das neben anderen Komponenten auch zu gewinnendes Material enthält.

Das flüssige Material, in den der Brüden kondensiert/absorbiert wird, unterliegt an sich keiner besonderen Beschränkung. Es eignen sich alle flüssigen Materialien, die bei/nach Einbringung des Brüdens zu einem flüssigen Gemisch führen, über dem die zu kondensierenden/absorbierenden Fluidkomponenten Partialdrücke aufweisen, die kleiner sind als die Partialdrücke dieser Komponenten über der kristallisierenden Lösung/Schmelze und dessen Gefrierpunkt tiefer liegt als die Kondensations-/Absorptionstemperatur.

Zweckmäßigerweise wird als flüssiges Material ganz oder teilweise zu kristallisierende Lösung oder Schmelze oder aus der Kristallisation kommende Mutterlauge, oder zum Teil Kristallsuspension, oder ein Gemisch davon verwendet. Diese Verfahrensgestaltung hat den Vorteil, daß zur Erzeugung des flüssigen Materials keine stoffsystemfremden Hilfsstoffe benötigt werden. Damit entfällt eine gesonderte Aufarbeitung oder Entsorgung des flüssigen Gemisches (Kondensatormischung). Insbesondere bei Siedekühlung (bei Rückfluß in die Kristallisation) wird durch diese Verfahrensweise die Verwendung von Fremdstoffen, die die Kristallisation negativ beeinflussen können, vermieden. Daneben kann bei einer Kristallisation durch Siedekühlung auch ein Hilfsstoff verwendet werden, jedoch wird dieser dann vorzugsweise so ausgewählt, daß er in Bezug auf die in der zu kristallisierenden Lösung enthaltenen Komponenten leichter siedend ist. Bei dem Hilfsstoff kann es sich hierbei auch um ein Gemisch von Hilfsstoffen handeln. In einer bevorzugten Ausführungsform handelt es sich bei dem flüssigen Material um ein einphasiges flüssiges Gemisch. Daneben kommt auch ein zweiphasiges flüssiges Gemisch in Frage, z.B. bei Verwendung einer Kristallsuspension. Das nach Einbringen des Brüdens in das flüssige Material entstehende flüssige Gemisch kann ganz oder teilweise in die Kristallisation zurückgeführt werden.

Die Kristallisation wird vorzugsweise bei einem Druck von 0,1 mbar bis 1 bar, insbesondere in Vakuum bei 1 bis 150 mbar, und bei einer Temperatur von 0,5 bis 50 K unterhalb des Schmelzpunktes des jeweiligen zu gewinnenden Materials durchgeführt. Vorzugsweise liegt die Temperatur des nach Einbringen des Brüdens in das flüssige Material entstehenden flüssigen Gemisches niedriger als die Sattdampftemperatur des Brüdens. In einer bevorzugten Ausgestaltung liegt der Gefrierpunkt des flüssigen Gemisches tiefer als der Gefrierpunkt des Brüdens.

Die Kristallisation kann als Verdampfungskristallisation, d.h. ohne Rückführung des kondensierten Brüdens, oder als Siedekühlung mit teilweiser oder vollständiger Rückführung des kondensierten Brüdens durchgeführt werden.

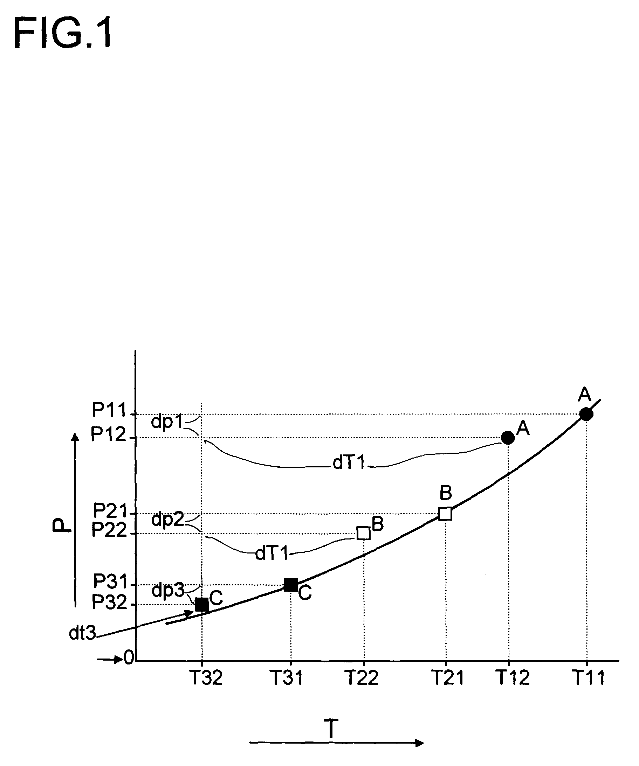

Figur 1 zeigt allgemein ein Dampfdruckdiagramm mit Dampfdruckkurve einer Lösung/Schmelze im Kristallisator mit dem Druck p als Ordinate und der Temperatur T als Abszisse. Grundsätzlich wird bei Verfahren zur Verdampfungskristallisation und zur Kristallisation durch Siedekühlung die Temperatur der Kristallsuspension im Kristallisationsapparat $T_{Krist}$ durch den im Apparat herrschenden Druck $p_{Krist}$ bestimmt. Die zur Kondensation des Brüdens notwendige Temperatur $T_{Kond}$ wird durch den den Kondensationsdruck $p_{Kond}$ entsprechenden Taupunkt des zu kondensierenden Brüdens festgelegt. Dabei ist der Kondensationsdruck $p_{Kond}$ um die Strömungsdruckverluste dp zwischen Kristallisationsapparat und Kondensationsapparat gegenüber dem Druck $p_{Krist}$ reduziert. Die im Kristallisationsapparat herrschende Temperatur $T_{Krist}$ ist bei gegebenem Strömungsdruckverlust dp somit durch die im Kondensator eingestellte Temperatur $T_{Kond}$ festgelegt. Fig. 1 zeigt drei Betriebspunkte A, B und C für hohe Temperaturen (Betriebspunkt 1, in der Fig. 1 dargestellt mit "A"), für mittlere Temperaturen (Betriebspunkt 2, in der Fig. 1 dargestellt mit "B") und für minimale Temperaturen (Betriebspunkt 3, in Fig. 1 dargestellt mit "C"). Zu jedem Betriebspunkt ist die zugehörige Temperatur der Kristallsuspension im Kristallisationsapparat, $T_{Krist}$, die durch den im Apparat herrschenden Druck $p_{Krist}$ bestimmt wird, angegeben, dargestellt für Betriebspunkt 1 oder A für Kristallisation durch $T_{11}$ und $p_{11}$, für Betriebspunkt 2 oder B für Kristallisation durch $T_{21}$ und $p_{21}$ und Betriebspunkt 3 oder C für Kristallisation durch $T_{31}$ und $p_{31}$. Entsprechend ist die zur Kondensation des Brüdens notwendige Temperatur $T_{Kond}$ in Fig. 1 für die drei Betriebspunkte A, B und C für Kondensation durch $T_{12}$, $T_{22}$ bzw. $T_{32}$ dargestellt, während die entsprechenden Kondensationsdrücke $p_{Kond}$ mit $p_{12}$, $p_{22}$ bzw. $p_{32}$ angegeben sind. $dp_1$, $dp_2$ und $dp_3$ bezeichnen die Stömungsdruckverluste des Kondensationsdrucks $p_{12}$, $p_{22}$ bzw. $p_{32}$ gegenüber dem Druck $p_{11}$, $p_{21}$ bzw. $p_{31}$. $dT_1$, $dT_2$ und $dT_3$ bezeichenen das zur Wärmeübertragung im Kondensator maximal verfügbare Temperaturgefälle $dT_{WÜT,max}$ (Temperaturdifferenz zwischen Tautemperatur des Brüdens und Gefriertemperatur des Kondensats) für die drei Betriebspunkte. Mit anderen Worten, die tiefste im Kristallisationsapparat erreichbare Temperatur $T_{Krist.min}$, die in Fig. 1 $T_{31}$ entspricht, ist durch die tiefste im Kondensator einstellbare Temperatur $T_{Kond.min}$, die in Fig. 1 $T_{32}$ entspricht (= Gefriertemperatur des zu kondensierenden Brüdens, vergleiche Betriebspunkt 3 oder C von Figur 1) festgelegt, da eine Feststoffbildung im Kondensationsapparat aus Gründen der Wärmeübertragung und/oder der Betriebssicherheit vermieden werden soll.

Gegenüber den bekannten Verfahren, bei denen der Brüden in kein flüssiges Material unter Ausbildung eines flüssigen Gemisches eingebracht wird, besitzt das erfindungsgemäße Verfahren die folgenden Vorteile:

- Es können Lösungen/Schmelzen, deren Gefrierpunkte unter der Temperatur $T_{Krist.min}$ liegen, mit Verfahren der Verdampfungskristallisation oder der Siedekühlung kristallisiert werden.

- In Fällen, in denen wegen tiefer Gefrierpunkte der Lösungen/Schmelzen die tiefstmögliche Kristallertemperatur $T_{Krist.min}$ als Betriebstemperatur der Kristallisation angenähert werden muß, wird bei dem erfindungsgemäßen Einsatz eines flüssigen Materials das zur Wärmeübertragung im Kondensator maximal verfügbare Temperaturgefälle $dT_{WÜT, max}$ (Temperaturdifferenz zwischen Tautemperatur des Brüdens und Gefriertemperatur des Kondensats) nicht so klein wie bei den bekannten Verfahren (vgl. Figur 1, von Zustand 1 (A) über 2 (B) nach 3 (C). Entsprechend reduzieren sich die erforderliche Wärmeaustauschfläche des Apparates und damit die Investitionskosten.

- Durch die Begrenzung der Kondensationstemperatur auf minimal Gefriertemperatur des zu kondensierenden Brüdens ist der minimale Dampfdruck des Kondensats im Kondensator festgelegt. Damit ist der kleinstmögliche, nicht kondensierbare Restbrüdenstrom, der zusammen mit nicht kondensierbaren Inertgasen den Kondensator wieder verlassen muß, festgelegt. Bei Vakuumkondensation ist damit eine Mindestgröße der Vakuumanlage hinsichtlich Fördervermögen für nicht kondensierbare Restgase erforderlich, die bei gleichem Kondensatordruck umso größer ist, je höher der minimale Dampfdruck des Kondensats im Kondensator ist. Durch das erfindungsgemäße Verfahren wird diese Mindestgröße der Vakuumanlage verringert.

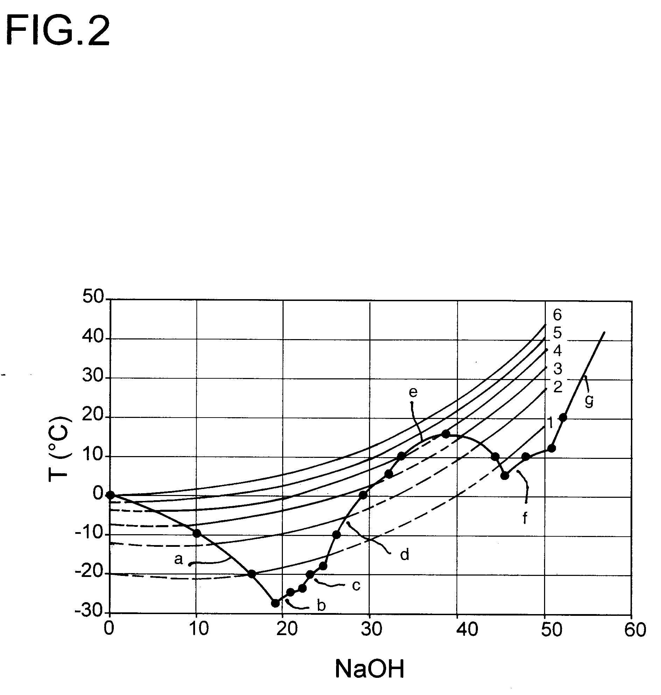

Die Erfindung wird anhand der folgenden Beispiele zusammen mit den Figuren 2 bis 5 näher erläutert, die jeweils bevorzugte Ausführungsformen der Erfindung darstellen.

## Beispiel 1: Kristallisation von NaOH · 3,5 $H_2O$ aus einer NaOH-$H_2O$-Mischung durch Siedekühlung

Figur 2 zeigt das Phasendiagramm des binären Stoffsystems NaOH-$H_2O$, wobei die Tempertaur auf der Ordinate in °C angegeben ist und der Anteil NaOH in Gew.-% auf der Abszisse angegeben ist. Bei den mit den Ziffern 1 bis 6 bezeichneten Isobaren geben die jeweiligen Ziffern den Druck in mbar an (z.B. 1 mbar für Isobare 1). Die Buchstaben a bis g bezeichnen die folgenden Phasen: a ist Eis, b ist NaOH · 7$H_2O$, c ist NaOH · 5$H_2O$, d ist NaOH · 4$H_2O$, e ist NaOH · 3,5$H_2O$, f ist NaOH · 2$H_2O$ und g ist NaOH · 1$H_2O$. Diesem Diagramm ist zu entnehmen, daß das kristallwasserhaltige NaOH · 3,5 $H_2O$ (e) erst ab Temperaturen von $T_{Krist} \leq$ 15,5 °C zu kristallisieren ist. Die im Phasendiagramm eingezeichneten Isobaren (Siedelinien der NaOH-$H_2O$-Mischungen) zeigen, daß zur Verdampfung von Wasser aus Mischungen, aus denen NaOH · 3,5$H_2O$ (e) auskristallisiert werden kann, ein Druck im Kristallisationsapparat von $p_{Krist} \leq$ 4,5 mbar erforderlich ist. Der Kondensationsdruck $p_{Kond}$ liegt wegen Strömungsdruckverlusten unterhalb des Kristallisationsdrucks $p_{Krist}$, z.B. bei $p_{Kond} \leq 4$ mbar. Der bei Verdampfung entstehende Brüden besteht aus Wasser, das einen Gefrierpunkt von 0°C bei einem Dampfdruck von $p_{H2O} =$ 6,1 mbar aufweist. Somit kann Wasser bei einem Kondensationsdruck $p_{Kond} \leq 4$mbar nicht mehr in flüssiger Form kondensiert werden. Um einen Kondensationsdruck von $p_{Kond} \leq 4$ mbar zu erreichen, müßte die Kondensationstemperatur $T_{Kond}$ auf $\leq$ - 5°C abgesenkt werden. Dies würde jedoch zum Gefrieren des Kondensats (Eisbildung) fuhren, was verhindert werden soll.

Erfindungsgemäß wird dieses Problem dadurch gelöst, daß eine Kondensatormischung erzeugt wird, die zu 5 bis 30 Gew.-% aus NaOH und zum Rest aus Wasser besteht. Bevorzugt wird eine Mischung verwendet, die zu 19 Gew.-% aus NaOH und zu 81 Gew.-% aus Wasser besteht. Letztere Mischung kann auf Temperaturen bis -25°C abgekühlt werden, ohne daß eine Feststoffbildung in der Mischung erfolgt. Diese Mischung weist bereits bei Temperaturen von -10 bis -20°C nur noch einen Dampfdruck von 1 bis 2 mbar auf, so daß der in der Kristallisation entstehende Brüden (z.B. bei $T_{Krist}$ = 15,5 °C, $p_{Krist}$ = 4 mbar) in dieser Mischung problemlos und bei großer Temperaturdifferenz zwischen Brüdentemperatur und Kondensatormischung kondensiert werden kann.

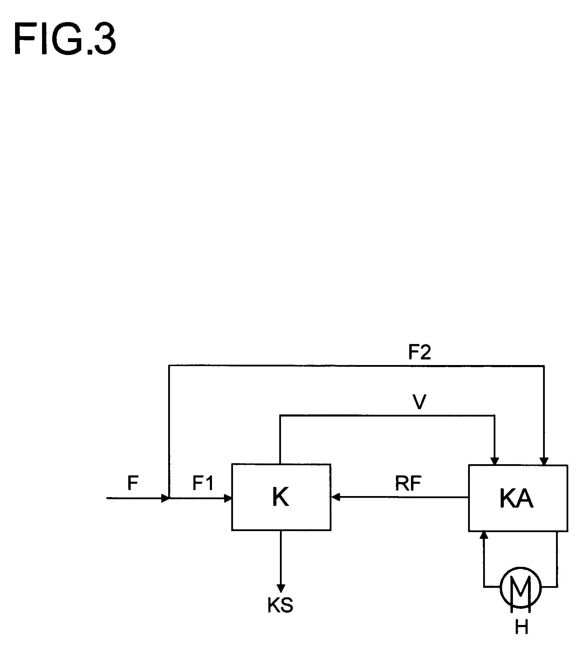

Figur 3 zeigt ein erfindungsgemäßes Verfahren zur Erzeugung der Kondensatormischung. Ein Teil F1 des ankommenden Feedstroms F wird direkt in die Kristallisation K gefahren, ein anderer Teil F2 des Feedstroms F wird in den Kondensationsapparat KA geführt und mit dem Brüdenstrom V gemischt. Der Strom F2 wird im Verhältnis zu Strom V so gewählt, daß eine Kondensatormischung der gewünschten Zusammensetzung entsteht. Die Kondensationswärme wird über einen konventionellen Wärmeübertrager H aus der Kondensatormischung abgezogen und die gekühlte Mischung als Strom RF in die Kristallisation K zurückgeführt. Die durch den Wärmeentzug in der Kristallisation K entstehenden Kristalle werden im Kristallsuspensionsstrom KS aus der Kristallisation abgeführt. Das erzeugte Kristallisat kann mit bekannten Methoden (Filtration, Sedimentation) aus der Suspension abgetrennt werden. Die verbleibende Mutterlauge kann ganz, in der Regel jedoch nur teilweise oder gar nicht in die Kristallisation zurückgeführt werden. Auszuschleusende Mutterlauge wird aus dem System abgezogen und kam mit bekannten Verfahren aufgearbeitet oder verworfen werden. Hinsichtlich der Zusammensetzungen von Feedstrom F und Kondensatormischung (= Strom RF) besteht lediglich die Notwendigkeit, daß der Feedstrom höher an NaOH konzentriert sein muß als die gewünschte Kondensatormischung (z.B. Feedstrom F mit 38,8% NaOH und Strom RF mit 19% NaOH).

**Beispiel 2: Kristallisation von Essigsäure aus einer Essigsäure-Wasser-Mischung durch Siedekühlung**

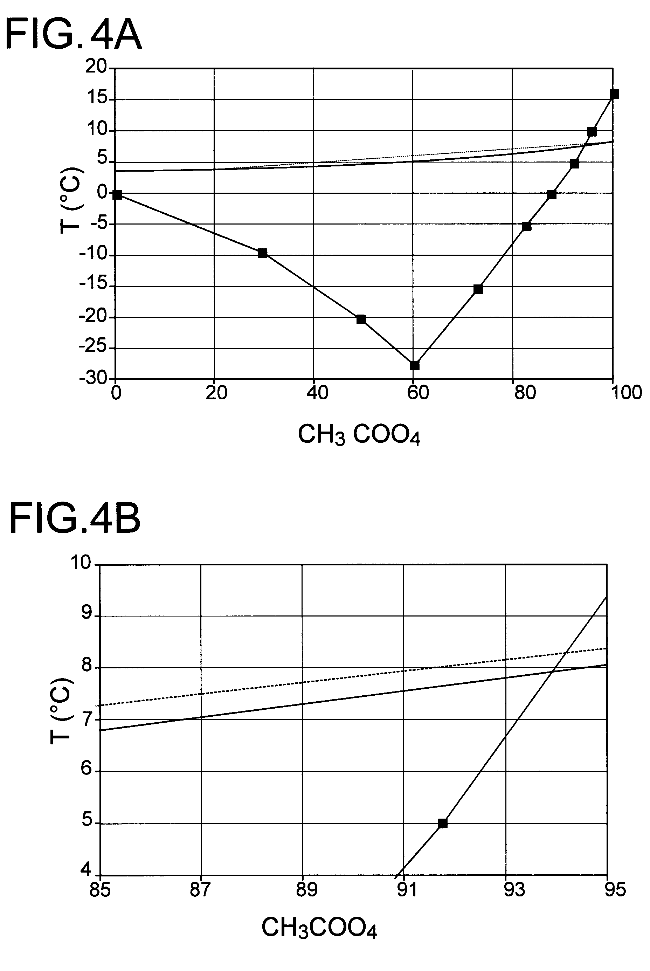

Das Phasendiagramm des binären, engsiedenden Stoffgemisches Essigsäure-$H_2O$ zeigt Figur 4A. Figur 4B zeigt einen vergrößerten Ausschnitt des Phasendiagramms von Figur 4A. In Fig. 4A und 4B ist die Temperatur T in °C auf der Ordinate angegeben und der Anteil Essigsäure ($CH_3COOH$) in Gew.-% auf der Abszisse angegeben. Die gestrichelt gezeichnete Linie bezeichnet die Taulinie für 8 mbar, während die durchgezogene Linie (ohne Kästchen) die Siedelinie für 8 mbar angibt. Der Betriebspunkt des Kristallers ist dadurch gekennzeichnet, daß Essigsäure (ESS) aus einer Mischung mit 94% ESS und 6% $H_2O$ auskristallisiert wird. Die Kristallisationstemperatur beträgt $T_{Krist}$ = 8°C und der Kristallisationsdruck liegt bei $p_{Krist}$ = 8 mbar (s. Siedelinie 8 mbar in Fig. 4B). Der die Kristallisation verlassende Brüden hat eine Zusammensetzung von 92% ESS und 8% $H_2O$ (s. zugehörige Taulinie 8 mbar in Fig. 4B). Selbst bei Vernachlässigung von Strömungsdruckverlusten liegt die Tautemperatur des Brüdens (8°C bei $p_{Kond}$ = 8 mbar) nur weniger als 3 Kelvin über dem Gefrierpunkt des kondensierten Brüdens (Gefriertemperatur 5,3 °C bei Zusammensetzung 92% ESS/ 8% $H_2O$). Zur Wärmeabfuhr aus dem Kondensat steht somit lediglich eine sehr kleine, nicht wirtschaftlich nutzbare Temperaturdifferenz von maximal $dT_{WÜT, max}$ = 2,7 K zur Verfügung, die sich aus der Differenz zwischen Tautemperatur des Brüdens und der Gefriertemperatur des kondensierten Brüdens ergibt.

Erfindungsgemäß wird die Kondensation dadurch gestaltet, daß eine Kondensatormischung mit 20 bis 80% ESS, bevorzugt mit 60% ESS verwendet wird. Letztere Mischung kann bis auf Temperaturen von -27°C abgekühlt werden, ohne daß der Gefrierpunkt dieser Mischung erreicht wird. Somit steht ein deutlich größeres $dT_{WÜT,max}$ von 35 K (Temperaturdifferenz zwischen Taupunkt des Brüdens und Gefrierpunkt der Kondensatormischung) für den Wärmeaustausch in der Kondensation zur Verfügung. Entsprechend kleiner und wirtschaftlicher fällt die Kondensationsstufe aus. Weiterhin ist der Dampfdruck dieser Kondensatormischung kleiner als der Dampfdruck des reinen, nicht gefrierenden Brüdenkondensats, so daß auch eine wirtschaftlichere, weil kleinere Vakuumanlage verwendet werden kann.

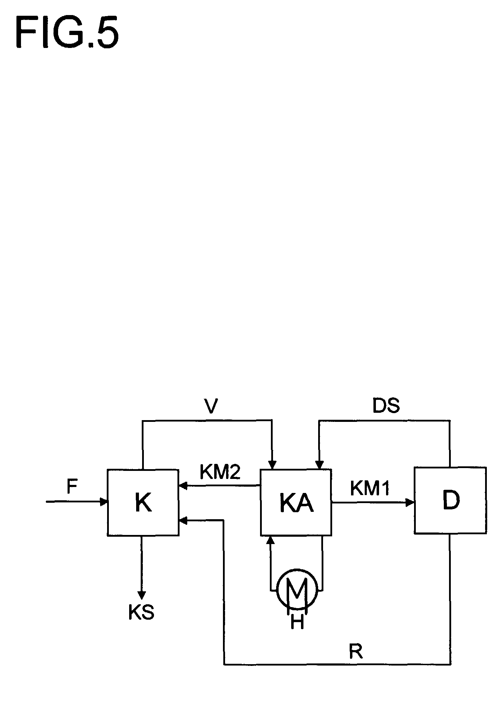

Figur 5 zeigt ein weiteres erfindungsgemäßes Verfahren zur Erzeugung der Kondensatormischung. Der Feedstrom F wird direkt in die Kristallisation K gefahren. Der die Kristallisation verlassende Brüden V wird in der Kondensation KA mit einem wasserreichen/ESS-armen Destillatstrom DS gemischt. Der Strom DS wird im Verhältnis zu Strom V so gewählt, daß eine Kondensatormischung KM der gewünschten Zusammensetzung entsteht. Der Teil KM 1 der Kondensatormischung wird der Destillation D zugeführt und in das erwähnte, wasserreiche Destillat DS und in den ESS-reichen Rückstand R zerlegt. Der Rückstand R geht zurück in die Kristallisation K. Der Teil KM 2 der Kondensatormischung geht ebenfalls zurück in die Kristallisation K. Die Kondensationswärme wird über einen konventionellen Wärmeübertrager H aus der Kondensatormischung abgezogen. Die durch den Wärmeentzug in der Kristallisation entstehenden Kristalle werden im Kristallsuspensionsstrom KS aus der Kristallisation abgeführt. Der Suspensionsstrom KS kann, wie unter Beispiel 1 beschrieben, behandelt und aufgearbeitet werden. Hinsichtlich der Zusammensetzung von Feedstrom F besteht lediglich die Notwendigkeit, daß der Feedstrom F höher an ESS konzentriert sein muß als die Mischung, aus der in der Kristallisation ESS auskristallisiert wird (z.B. Feedstrom F mit 99 % ESS und Mischung in der Kristallisation mit 94% ESS).

**Patentansprüche**

1. Verfahren zur Kristallisation von zu gewinnendem Material durch Verdampfung von Fluid aus einer Schmelze bzw. Lösung, die das zu gewinnende Material, das Fluid und gegebenenfalls weitere Komponenten enthält, und Kondensation oder Absorption des verdampften Fluids (Brüden) in ein flüssiges Material unter Ausbildung eines flüssigen Gemisches, wobei das zu gewinnende Material ausgewählt ist aus:

(a) anorganischen Salzen und Salzen organischer Verbindungen und deren Solvate, vorzugsweise Hydrate, die im Gemisch mit Wasser und/oder organischen Lösungsmitteln als Fluid vorliegen,

(b) organischen Komponenten, die in einem engsiedenden Gemisch mit organischen Verbindungen und/oder Wasser vorliegen, wobei die unter Kristallisationsdruck und -temperatur im Gleichgewicht stehenden Gas- und Flüssigphasen hinsichtlich des zu gewinnenden Materials, der organischen Verbindungen und/oder Wasser Unterschiede von < 10 Gew.-% in den Konzentrationen aufweisen,

(c) Alkandiolen, die im Gemisch mit Wasser und/oder organischen Verbindungen vorliegen, und

(d) organischen Komponenten, die im Gemisch mit organischen Verbindungen und/oder Wasser vorliegen, wobei die zu gewinnende organische Komponente leichter siedend in Bezug auf die organischen Verbindungen und/oder Wasser ist,

**dadurch gekennzeichnet, daß**

die zu kondensierenden/absorbierenden Fluidkomponenten Partialdrücke über dem flüssigen Gemisch aufweisen, die kleiner sind als die Partialdrücke dieser Komponenten über der kristallisierenden Lösung/Schmelze und der Gefrierpunkt des flüssigen Gemisches tiefer liegt als die Kondensations-/Absorptionstemperatur im flüssigen Gemisch.

2. Verfahren nach Anspruch 1, dadurch gekennzeichnet, daß das flüssige Material ein einphasiges flüssiges Gemisch ist.

3. Verfahren nach Anspruch 1, dadurch gekennzeichnet, daß man als flüssiges Material ganz oder teilweise zu kristallisierende Lösung oder Schmelze oder aus der Kristallisation kommende Mutterlauge, oder zum Teil Kristallsuspension, oder ein Gemisch davon verwendet.

4. Verfahren nach einem der Ansprüche 1 bis 3, dadurch gekennzeichnet, daß das flüssige Gemisch ganz oder teilweise in die Kristallisation zurückgeführt wird.

5. Verfahren nach einem der vorhergehenden Ansprüche, dadurch gekennzeichnet, daß es sich bei dem zu gewinnenden Material um (a) Natriumhydroxid-Hydrat, (b) Essigsäure oder (c) 1,4-Butandiol und/oder 1,6-Hexandiol handelt.

6. Verfahren nach einem der vorhergehenden Ansprüche, dadurch gekennzeichnet, daß die Konzentration an zu gewinnendem Material in dem Gemisch größer als bei der eutektischen Zusammensetzung ist, und bevorzugt die Konzentration an zu gewinnendem Material mindestens 10 Gew.-% in dem Gemisch beträgt.

7. Verfahren nach einem der vorhergehenden Ansprüche, dadurch gekennzeichnet, daß die Kristallisation bei einem Druck von 0,1 mbar bis 1 bar durchgeführt wird.

8. Verfahren nach einem der vorhergehenden Ansprüche, dadurch gekennzeichnet, daß die Temperatur des flüssigen Gemisches niedriger als die Sattdampftemperatur des Brüdens liegt.

9. Verfahren nach einem der vorhergehenden Ansprüche, dadurch gekennzeichnet, daß der Gefrierpunkt des flüssigen Gemisches tiefer liegt als der Gefrierpunkt des Brüdens.

# FIG.1

# FIG.2

# FIG.3

# FIG.4A

CH₃ COO₄

# FIG.4B

CH₃COO₄

# FIG.5

**Europäisches Patentamt**

# EUROPÄISCHER RECHERCHENBERICHT

Nummer der Anmeldung

EP 98 10 7534

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 3 963 424 A (F.BELLA, JR.) 15.Juni 1976 * Anspruch 1; Abbildung 1; Beispiel 1 * --- | 1-3,5-9 | B01D9/00 |
| A,D | PATENT ABSTRACTS OF JAPAN vol. 95, no. 006, 28.Juli 1995 & JP 07 082210 A (TSUKISHIMA KIKAI CO), 28.März 1995, * Zusammenfassung * --- | 1 | |
| A | WO 91 13301 A (C.-Y. CHENG) 5.September 1991 * das ganze Dokument * | 1 | |
| D | & US 5 061 306 A ----- | | |

**RECHERCHIERTE SACHGEBIETE (Int.Cl.6)**

B01D

Der vorliegende Recherchenbericht wurde für alle Patentansprüche erstellt

| Recherchenort | Abschlußdatum der Recherche | Prüfer |
|---|---|---|
| BERLIN | 25.August 1998 | Bertram, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)